# EUROPÄISCHE PATENTANMELDUNG

(11) **EP 2 354 045 A1**
(43) Veröffentlichungstag der Anmeldung: **10.08.2011**
(21) Anmeldenummer: 11150477.5
(22) Anmeldetag: 10.01.2011
(51) Int. Cl.: B65G 1/04

(54) **Regallager**

(30) Priorität: 28.01.2010 DE 202010003476 U
(71) Anmelder: viastore systems GmbH, 70469 Stuttgart (DE); Servus Robotics GmbH, 6850 Dornbirn (AT)
(72) Erfinder: Hahn-Woernle, Christoph, 70469 Stuttgart (DE); Beer, Christian, 6850 Dornbich (AT); Apel, Frank, 70469 Stuttgart (DE)
(74) Vertreter: Patentanwälte Ruff, Wilhelm, Beier, Dauster & Partner

(57) **Zusammenfassung**

1. Regallager
2. Regallager mit einem Regal (12,14), das Lagerplätze für Lagergut in mehreren waagerechten Regalebenen und mehreren senkrechten Regalreihen aufweist, wenigstens einem Regalbediengerät (22) mit einem Lastaufnahmemittel (28) für Lagergut, wobei das Regalbediengerät (22) entlang der Regalebenen und Regalreihen verfahrbar ist.
2.2 Erfindungsgemäß ist vorgesehen, dass ein weiteres Transportgerät für Ladegut entlang einer vordefinierten Regalebene (34) verfahrbar und zum Aufnehmen und Ablegen von Lagergut in wenigstens zwei Lagerplätze (46) der vordefinierten Regalebene (34) ausgebildet ist.

## Beschreibung

Die Erfindung betrifft ein Regallager mit einem Regal, das Lagerplätze für Lagergut in mehreren waagerechten Regalebenen und mehreren senkrechten Regalreihen aufweist, und mit wenigstens einem Regalbediengerät mit einem Lastaufnahmemittel für Lagergut, wobei das Regalbediengerät entlang der Regalebenen und Regalreihen verfahrbar ist.

Bei bekannten Regallagern ist eine Fördertechnik, beispielsweise Rollenbahnen oder dergleichen, bis an einen Übergabeplatz geführt, von dem aus das Regalbediengerät Lagergut übernimmt und in die einzelnen Lagerplätze in den Regalebenen und Regalreihen einlagert. Beim Auslagern wird in umgekehrter Reihenfolge vorgegangen.

Aus der deutschen Offenlegungsschrift DE 10 2004 051 086 A1 ist ein Regallager mit einem Regalbediengerät bekannt, wobei das Regal eine neunfach tiefe Einlagerung von Lagergut erlaubt. Nur jeweils der vorderste, dem Regalgang zugewandte Lagerplatz kann mit dem Regalbediengerät erreicht werden. Um die hinteren Lagerplätze zu erreichen, ist ein Lagerfahrzeug vorgesehen, das sich entlang dem jeweiligen Regalfach bewegen kann, um Lagergut aufzunehmen oder abzusetzen.

Aus der deutschen Offenlegungsschrift DE 100 57 735 A1 ist ein Regallager bekannt, das in einem Regalgang zwischen zwei Regalreihen ein Regalbediengerät aufweist. Zusätzlich sind an den Außenseiten des Regals Pickerfahrzeuge vorgesehen, die mit Kommissionierern besetzt sind und die unabhängig von den Regalbediengeräten bewegt werden können.

Die Europäische Patentschrift EP 0242730 B1 beschreibt eine Regalanlage zum Speichern von Paletten. Ein Palettenwagen fährt beladen in das Regal ein und wird mittels einer Hubgabel automatisch be- oder entladen. Die Hubgabel übernimmt Paletten unmittelbar von dem Palettenwagen und übergibt Paletten aus dem Regal wieder an den Palettenwagen.

Mit der Erfindung soll ein Regallager verbessert werden.

Erfindungsgemäß ist hierzu ein Regallager mit einem Regal, das Lagerplätze für Lagergut in mehreren waagerechten Regalebenen und mehreren senkrechten Regalreihen aufweist, und mit wenigstens einem Regalbediengerät mit einem Lastaufnahmemittel für Lagergut vorgesehen, wobei das Regalbediengerät entlang der Regalebenen und Regalreihen verfahrbar ist, bei dem ein weiteres Transportgerät zum Bereitstellen von in das Regal einzuladenden oder zum Übernehmen von aus dem Regal auszuladenden Ladegut vorgesehen ist, das entlang einer vordefinierten Regalebene verfahrbar und zum Aufnehmen und Ablegen von Lagergut in wenigstens zwei Lagerplätze der vordefinierten Regalebene ausgebildet ist, wobei die wenigstens zwei Lagerplätze als Übergabeplätze ausgebildet sind, von denen das Regalbediengerät Lagergut übernimmt oder an die das Regalbediengerät Lagergut übergibt.

Bei der erfindungsgemäßen Ausbildung eines Regallagers können damit in besonders einfacher und effizienter Weise mehrere Lagerplätze des Regals als Übergabeplätze benutzt werden. Als Übergabeplätze werden dabei wenigstens zwei Lagerplätze in der vordefinierten Regalebene verwendet, so dass die Strecken, die das Regalbediengerät zurücklegen muss, wesentlich minimiert werden können. Beispielsweise kann das weitere Transportgerät Lagergut bereits im Bereich einer Regalreihe ablegen, in der dann das Regalbediengerät das Lagergut endgültig einlagern soll. Das Regalbediengerät muss dadurch nicht die gesamte Lagergasse entlang zu einem außerhalb des Regals liegenden Übergabeplatz fahren, sondern kann das Lagergut bereits im Bereich der für die endgültige Einlagerung vorgesehenen Regalreihe übernehmen. Indem die erforderlichen Verfahrstrecken des Regalbediengeräts minimiert werden, sinkt der Energieverbrauch, der Verschleiß und, je nach gewünschter Vorgabe, kann der Durchsatz eines Regallagers wesentlich erhöht werden. Indem erfindungsgemäß also mehrere Lagerplätze einer vordefinierten Regalebene als Übergabeplätze genutzt werden, können diese mehreren Übergabeplätze auch als Puffer benutzt werden. Kurzzeitige Lastspitzen beim Durchsatz durch das Regallager können dadurch abgepuffert werden. Im Ergebnis werden durch die Erfindung in überraschend einfacher Weise die notwendigen Verfahrstrecken eines Regalbediengeräts minimiert und es kann gleichzeitig ein Puffer für die Zwischenlagerung von Lagergut vor der endgültigen Einlagerung durch das Regalbediengerät geschaffen werden. Dies geschieht in sehr einfacher Weise durch die Kombination eines weiteren Transportgeräts, beispielsweise eines fahrerlosen Transportsystems und einem Regallager mit einem Regalbediengerät. Das weitere Transportgerät kann auf verschiedenste Weise ausgebildet sein, beispielsweise als Transportwagen mit ausfahrbarem Riemenförderer, ausfahrbarer Hubgabel, mit Transportriemen oder dergleichen.

In Weiterbildung der Erfindung ist das weitere Transportgerät zum Aufnehmen und Ablegen von Lagergut in eine Anzahl von hintereinander in Verfahrrichtung des weiteren Transportgeräts angeordneten Lagerplätzen ausgebildet, wobei die Anzahl der Lagerplätze der Anzahl an Regalreihen entspricht.

Auf diese Weise stehen so viele Übergabeplätze zur Verfügung, wie Regalreihen vorhanden sind. Dies erlaubt es, Lagergut bereits im Bereich der für die endgültige Einlagerung vorgesehenen Regalreihe abzulegen und schafft darüber hinaus einen Puffer für das Zwischenlagern von Lagergut beim Ein- bzw. Auslagern.

In Weiterbildung der Erfindung weist das weitere Transportgerät wenigstens eine entlang der vordefinierten Regalebene verlaufende Schiene und einen entlang der Schiene verfahrbaren Transportwagen auf.

Schienengebundene Transportwagen sind kostengünstig und vor allem in zuverlässiger und voll automatisierter Technik erhältlich. Die Schienen für das weitere Transportgerät verlaufen entlang der vordefinierten Regalebene, beispielsweise auf halber Höhe des Regals, um die erforderlichen Wegstrecken des Regalbediengeräts beim Einlagern weiter zu minimieren. Selbstverständlich ist eine Anordnung der Schienen des weiteren Transportgeräts auch auf anderen Regalebenen möglich. Die Übergabe in das Regal und die Übernahme auf den Transportwagen kann in im wesentlichen beliebiger Weise erfolgen.

In Weiterbildung der Erfindung sind das Regalbediengerät und das weitere Transportgerät auf verschiedenen Seiten des Regals angeordnet.

Auf diese Weise können keine Kollisionen oder Konflikte zwischen Regalbediengerät und weiterem Transportgerät auftreten. Das weitere Transportgerät übergibt Lagergut auf Lagerplätze der vordefinierten Regalebene von einer ersten Seite her und das Regalbediengerät übernimmt das Lagergut von der anderen Seite des Regals her. Beim Auslagern von Lagergut wird umgekehrt vorgegangen. Es ist beispielsweise auch möglich, das weitere Transportgerät zwischen zwei Regalen verfahren zu lassen, wobei Lagergut alternativ in ein rechtes oder linkes Regal eingelagert wird. Dem rechten und linken Regal ist dann jeweils ein Regalbediengerät zugeordnet, wobei diese Regalbediengeräte dann die endgültige Einlagerung in das Regal übernehmen. Die Auslagerung von Lagergut erfolgt in umgekehrter Weise.

In Weiterbildung der Erfindung ist das weitere Transportgerät entlang der untersten Regalebene des Regals verfahrbar.

Auf diese Weise kann sich das weitere Transportgerät auf oder geringfügig über der Bodenebene bewegen und beispielsweise den Eintransport bzw. Abtransport von Lagergut zu weiteren Verarbeitungsstationen auf Bodenebene oder etwa Tischhöhe besorgen. Beispielsweise kann das weitere Transportgerät einen schienengebundenen Wagen aufweisen und die Transportwagen werden dadurch auf einer Höhe verfahren, die ohne Vertikaltransport das Kommissionieren von Waren aus Lagergutbehältern möglich macht.

In Weiterbildung der Erfindung ist das Regal wenigstens doppelt tief mit zwei Lagerplätzen für Lagergut hintereinander in Tiefenrichtung ausgebildet und das weitere Transportgerät ist innerhalb des Regals entlang der vordefinierten Regalebene verfahrbar.

Auf diese Weise kann eine sehr platzsparende Anordnung vorgenommen werden und beispielsweise können auch vorhandene Regallager mit dem weiteren Transportgerät ausgerüstet werden, indem in der vordefinierten Regalebene der jeweils hintere Lagerplatz genutzt wird, um das weitere Transportgerät entlang der Regalebene verfahren zu können. Beispielsweise ist ein Regalbediengerät in einer Lagergasse zwischen zwei jeweils doppelt tiefen Regalen verfahrbar. Die Lagerplätze der untersten Regalebene eines dieser beiden Regale entfallen und anstelle dieser jeweils hinteren Lagerplätze wird ein Schienensystem für Transportwagen verlegt. Die Transportwagen können dadurch Lagergut in alle vorderen Lagerplätze der untersten Regalebene einlagern, so dass so viele Übergabeplätze für Lagergut zur Verfügung stehen, wie die beiden Regalreihen aufweisen. Von diesen Übergabeplätzen an den jeweils vorderen Lagerplätzen der untersten Regalebene des einen, beispielsweise linken, Regals kann das Regalbediengerät dann Lagergut aufnehmen und in das linke oder rechte Regal einlagern. An endgültigen Lagerplätzen stehen somit alle Regalebenen des linken Regals mit Ausnahme der untersten Regalebene sowie alle Regalebenen des rechten Regals zur Verfügung. Die Schienen für den Transportwagen können selbstverständlich in jeder beliebigen Regalebene verlegt werden und selbstverständlich ist auch eine Realisierung der Erfindung bei einem dreifach- oder vierfach tiefen Regal möglich. Je nach der Breite des verwendeten weiteren Transportgeräts muss lediglich ein Lagerplatz oder müssen mehrere Lagerplätze in der vordefinierten Regalebene eines mehrfach tiefen Regals entfallen.

Beispielsweise weist das weitere Transportgerät einen entlang der vordefinierten Regalebene verfahrbaren Transportwagen und wenigstens einen umlaufenden Lastaufnahmeriemen auf, wobei der Lastaufnahmeriemen quer zur Verfahrrichtung des Transportwagens ausgerichtet ist, die Umlenkpunkte des Lastaufnahmeriemens relativ zum Transportwagen fixiert sind und der Lastaufnahmeriemen wenigstens einen verdickten Abschnitt aufweist.

Mit solchen Transportwagen lässt sich ein Abgeben und Übernehmen von Lagergut, insbesondere wenn das Lagergut als Behälter ausgebildet ist, in sehr einfacher und zuverlässiger Weise bewirken.

In Weiterbildung der Erfindung sind als Ladegut trogartige Behälter für Kleinteile vorgesehen.

Gerade bei Behälterlagern lässt sich die Erfindung in besonders vorteilhafter Weise realisieren. Die mittels des weiteren Transportgeräts übernommenen Behälter können beispielsweise direkt zu einem Kommissionierplatz oder allgemein zur Weiterverarbeitung transportiert werden. Umgekehrt kann die Einlagerung fertiggestellter Endprodukte oder Zwischenprodukte unmittelbar in den Behältern erfolgen, die beispielsweise auch in der Produktion verwendet werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen Ausführungsformen lassen sich dabei in beliebiger Weise kombinieren, ohne den Rahmen der Erfindung zu überschreiten. In den Zeichnungen zeigen:
- Fig. 1: eine Vorderansicht eines erfindungsgemäßen Regallagers gemäß einer ersten Ausführungsform in Richtung einer Lagergasse,
- Fig. 2: eine Ansicht von schräg oben eines erfindungsgemäßen Regallagers,
- Fig. 3: eine schematische Darstellung eines Transportwagens für das Regallager der Fig. 1,
- Fig. 4: eine schematische Vorderansicht eines erfindungsgemäßen Regallagers gemäß einer zweiten Ausführungsform,
- Fig. 5: eine schematische Vorderansicht eines erfindungsgemäßen Regallagers gemäß einer dritten Ausführungsform in einem ersten Betriebszustand und
- Fig. 6: das Regallager der Fig. 5 in einem zweiten Betriebszustand.

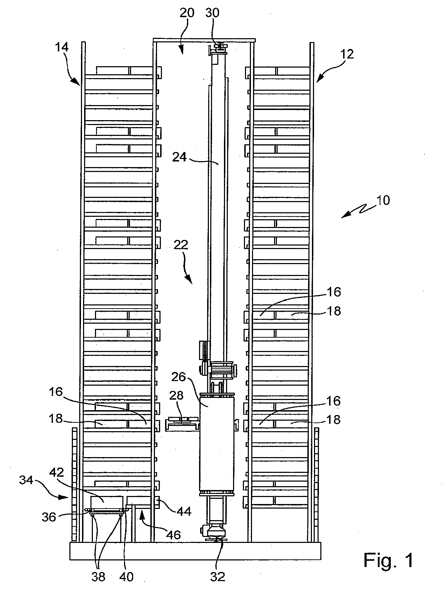

Die Darstellung der Fig. 1 zeigt ein erfindungsgemäßes Regallager 10 gemäß einer ersten Ausführungsform. Das Regallager 10 weist ein in der Ansicht der Fig. 1 rechtes Regal 12 und ein linkes Regal 14 auf. Die Regale 12, 14 sind jeweils doppelt tief ausgebildet und weisen in jeder Regalebene jeweils Lagerplätze für zwei Behälter 16, 18 in Tiefenrichtung des Regals 12 hintereinander auf. Die Regale 12, 14 weisen jeweils 29 waagerecht verlaufende Regalebenen auf. In der Ansicht der Fig. 1 ist jeweils lediglich eine senkrecht verlaufende Regalreihe der Regale 12, 14 zu erkennen. In einer Lagergasse 20 zwischen den Regalen 12, 14 ist ein Regalbediengerät 22 angeordnet, das einen Mast 24, einen Wagen 26 und ein Lastaufnahmemittel 28 an dem Wagen 26 aufweist. Mit dem Lastaufnahmemittel 28 können Behälter 16, 18 sowohl aus dem rechten Regal 12 als auch dem linken Regal 14 entnommen werden und entweder auf einen unmittelbar an die Lagergasse 20 angrenzenden vorderen Lagerplatz oder einen demgegenüber um etwas mehr als eine Behälterlänge nach hinten zurückversetzten hinteren Lagerplatz abgesetzt oder wieder übernommen werden. Der Wagen 26 ist entlang dem Mast 24 verfahrbar. Der Mast 24 selbst ist an seinem oberen und unteren Ende an Schienen 30, 32 gelagert und entlang dieser Schienen 30, 32 entlang der Lagergasse 20 verfahrbar. Durch entsprechende Ansteuerung der Antriebsmotoren für den Mast 24 oder den Wagen 26 bzw. das Lastaufnahmemittel 28 kann damit jeder Lagerplatz in den Regalen 12, 14 erreicht werden.

Entlang der untersten Regalebene 34 des in Fig. 1 linken Regals 14 ist ein weiteres Transportgerät in Form eines Transportwagens 36 auf Schienen 38 verfahrbar, also in die Zeichenebene hinein oder umgekehrt. Der Transportwagen 36 weist zwei umlaufende Lastaufnahmeriemen 40 auf, von denen in Fig. 1 lediglich einer erkennbar ist. Mittels der Lastaufnahmeriemen 40 kann ein auf dem Transportwagen 36 befindlicher Behälter 42 in einen Lagerplatz 46 der untersten Regalreihe 34 abgesetzt werden oder ein Behälter 44 kann von dem Lagerplatz 46 auf den Transportwagen 36 übernommen werden. In der Darstellung der Fig. 1 befindet sich der Behälter 42 auf dem Transportwagen 36. Der Behälter 44 befindet sich auf dem vorderen Lagerplatz 46 in der untersten Regalreihe 34. Vorausgesetzt, der Behälter 44 wäre nicht vorhanden und der vordere Lagerplatz 46 in der untersten Regalreihe 34 damit leer, könnte der Behälter 42 mittels der Lastaufnahmeriemen 40 vom Transportwagen 36 auf diesen Lagerplatz 46 bewegt werden. Umgekehrt könnte dann, wenn der Behälter 42 nicht vorhanden wäre, der Behälter 44 vom Lagerplatz 46 auf den Transportwagen 36 übernommen werden.

Die jeweils vorderen Lagerplätze 46 in der untersten Regalebene 34 des linken Regals 14 stehen für die Übernahme von Behältern 42 bzw. für das Auslagern von Behältern 44 auf den Transportwagen 36 zur Verfügung. Letztendlich wird durch Vorsehen des weiteren Transportgeräts in Form des auf den Schienen 38 laufenden Transportwagens 36 damit eine Anzahl an Übergabeplätzen für Behälter geschaffen, die der Anzahl der bei dem linken Regal 14 vorhandenen senkrechten Regalreihen entspricht.

Durch diese mehreren Übergabeplätze kann ein Puffer für einzulagernde bzw. auszulagernde Behälter 42, 44 geschaffen werden. Darüber hinaus können auch die notwendigen Wegstrecken, die das Regalbediengerät 22 zurücklegen muss, deutlich minimiert werden. So kann ein einzulagernder Behälter 42 bereits auf dem vorderen Lagerplatz 46 der untersten Regalebene 34 derjenigen senkrechten Regalreihe angeordnet werden, in der sich der für die endgültige Einlagerung vorgesehene Lagerplatz befindet. Das Regalbediengerät muss dadurch zwar die vorgesehene Regalreihe anfahren, nach Übernahme des Behälters 42 muss das Regalbediengerät 22 aber lediglich nach oben zu dem vorgesehenen Lagerplatz verfahren. Umgekehrt kann das Regalbediengerät 22 einen auszulagernden Behälter auf dem vorderen Lagerplatz 46 der untersten Regalreihe 34 ablegen, der sich in der Regalreihe befindet, aus der der auszulagernde Behälter entnommen wurde. Das Regalbediengerät muss hierzu lediglich eine Wegstrecke nach unten zurücklegen.

Sollten beim Einlagern bzw. Auslagern die jeweiligen vorderen Lagerplätze 46 in der untersten Regalreihe 34 belegt sein, können die Behälter 42, 44 wenigstens im Bereich des Lagerplatzes in den Regalen 12, 14 abgelegt werden, beispielsweise in einer davor oder dahinter befindlichen Regalreihe. In ähnlicher Weise können Behälter aus dem in Fig. 1 rechten Regal 12 in den jeweils gegenüberliegenden vorderen Lagerplätzen 46 der untersten Regalebene 34 des linken Regals 14 abgelegt bzw. aus diesem entnommen werden. Im Ergebnis wird somit nicht nur zusätzlicher Pufferplatz für Behälter 42, 44 geschaffen, sondern die vom Regalbediengerät 22 zurückzulegenden Wegstrecken können erheblich minimiert werden.

Anhand der Darstellung der Fig. 1 ist zu erkennen, dass die Schienen 38 für den Transportwagen 36 innerhalb des linken Regals 14 verlaufen. Es ist dadurch möglich, ein bestehendes, konventionelles Regallager mit den Schienen 38 und dem Transportwagen 36 zu versehen. Hierzu müssen lediglich die jeweils hinteren Lagerplätze der untersten Regalreihe 34 des linken Regals 14 entfallen.

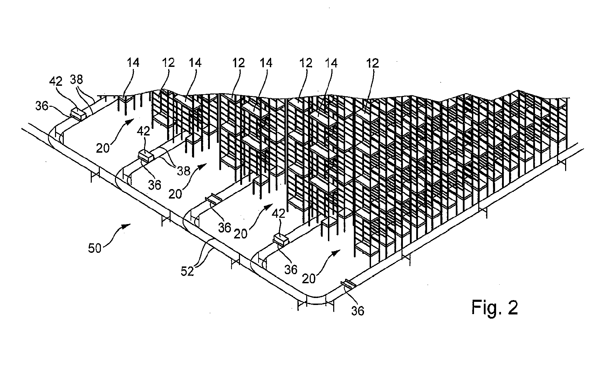

Die Darstellung der Fig. 2 zeigt ein analog zum Regallager 10 der Fig. 1 aufgebautes Regallager 50, das mehrere Regale 12, 14 aufweist, die jeweils für die doppelt tiefe Einlagerung von Behältern vorgesehen sind. In den Lagergassen 20 zwischen zwei Regalen 12, 14 ist jeweils ein dem Regalbediengerät 22 aus Fig. 1 entsprechendes Regalbediengerät angeordnet, das in der Darstellung der Fig. 2 aber der Übersichtlichkeit halber nicht dargestellt ist.

Innerhalb jedem der linken Regale 14 verlaufen auf der jeweils untersten Regalebene Schienen 38 für Transportwagen 36. Die Schienen 38, die jeweils anstelle der hinteren Lagerplätze in der untersten Regalebene der linken Regale 14 verlaufen, sind über Weichen mit einer weiteren Schienenstrecke 52 verbunden, die beispielsweise zu Kommissionierplätzen führt. In der Darstellung der Fig. 2 sind die Wagen 36 teilweise mit Behältern 42 beladen, teilweise sind sie nicht beladen dargestellt.

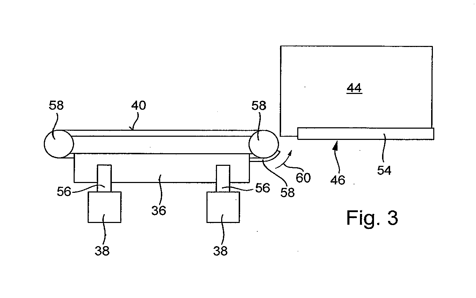

Die schematische Darstellung der Fig. 3 verdeutlicht das Übernehmen und Übergeben eines Behälters 44 von bzw. auf den vorderen Lagerplatz 46 eines Regals 14, siehe Fig. 1.

Der Behälter 44 ist auf beiden Seiten auf Winkelschienen 54 aufgesetzt. Ein in der Darstellung der Fig. 3 linkes Ende des Behälters 44 ragt frei über das Ende der Winkelschienen 54 hinaus. Der Transportwagen 36 weist Räder 56 auf, die auf den Schienen 38 laufen und ist weiter mit zwei umlaufenden Lastaufnahmeriemen 40 versehen, von denen in der Darstellung der Fig. 3 lediglich einer zu erkennen ist. Der Lastaufnahmeriemen 40 läuft über Umlenkrollen 58, die senkrecht zu einer Längsrichtung der Schienen 38 voneinander beabstandet und am Transportwagen 36 um ihre Drehachse drehbar fixiert sind. Durch die Lastaufnahmeriemen 40 kann ein Behälter somit senkrecht zu der Verfahrrichtung des Transportwagens 36 auf den Transportwagen 36 übernommen oder von diesem abgegeben werden.

Um das Übernehmen des Behälters 40 zu ermöglichen, sind die Lastaufnahmeriemen 40 mit einem verdickten Abschnitt 58 versehen. Der Transportwagen 36 wird dabei so nah an dem Behälter 44 vorbeigeführt, dass der nicht verdickte Abschnitt der Lastaufnahmeriemen 40 gerade noch an der in der Darstellung der Fig. 3 unteren linken Kante des Behälters 44 vorbeifahren kann. Der Abstand zwischen dem nicht verdickten Abschnitt der Lastaufnahmeriemen 40 und der linken unteren Kante des Behälters 44 ist aber kleiner als die Dicke des verdickten Abschnitts 58. Soll der Behälter 44 somit auf den Transportwagen 36 übernommen werden, wird der Transportwagen 36 neben dem Behälter 44, wie in Fig. 3 dargestellt ist, angeordnet. Daraufhin werden die Umlenkrollen 58 in Drehung versetzt, so dass sich der verdickte Abschnitt 58 entlang dem Pfeil 60 nach oben bewegt. Der verdickte Abschnitt 58 wird dadurch die linke untere Kante des Behälters 44 erfassen und den Behälter 44 dadurch auf den Transportwagen 36 befördern.

Zum Übergeben eines Behälters auf den Lagerplatz 46 werden die Lastaufnahmeriemen 40 in umgekehrter Richtung betrieben. Sobald der verdickte Abschnitt 58 in einer Richtung entgegen dem Pfeil 60 die unterer linke Kante des Behälters 44 verlassen hat, ist der Transportwagen 36 wieder frei und kann entlang der Schienen 38 verfahren werden.

Die Transportwagen 36 sowie die Regalbediengeräte 22 werden von einer zentralen, nicht dargestellten Steuereinheit angesteuert.

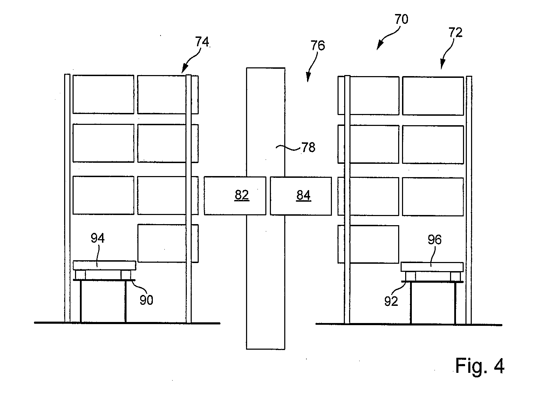

Die schematische Frontansicht eines weiteren erfindungsgemäßen Regallagers 70 in Fig. 4 zeigt zwei Regale 72, 74, die zu beiden Seiten einer Lagergasse 76 angeordnet sind. Die beiden Regale 72, 74 sind jeweils doppelt tief ausgebildet, so dass also mit Ausnahme der untersten Regalebene jeweils zwei Lagergutbehälter hintereinander in jedem Regal angeordnet werden können.

Innerhalb der Lagergasse 76 ist ein lediglich schematisch dargestelltes Regalbediengerät 78 sowohl in Hochrichtung an einem Mast als auch in Längsrichtung verfahrbar. Das Regalbediengerät weist ein Lastaufnahmemittel auf, mit dem gleichzeitig zwei Lagergutbehälter 82, 84 aufgenommen, bewegt und wieder übergeben werden können.

Sowohl bei dem in der Fig. 4 rechten Regal 72 als auch bei dem in Fig. 4 linken Regal 74 weist die unterste Regalebene jeweils lediglich einen Lagerplatz für Behälter 86, 88 auf, so dass also die unterste Regalebene lediglich einfach tief ausgebildet ist. An der Stelle des jeweils hinteren, von der Lagergasse 76 abgewandten Lagerplatzes der jeweils untersten Regalebene sind Schienen 90, 92 verlegt, auf denen ein Transportwagen 94 bzw. 96 auf Höhe der untersten Regalebene und parallel zur Lagergasse 76 entlang der gesamten untersten Regalebene verfahren kann.

Beispielsweise werden von dem in Fig. 4 rechten Transportwagen 96 Behälter 86 auf die jeweils vorderen Lagerplätze der untersten Regalebene des rechten Regals 72 übergeben. Von dort aus kann das Regalbediengerät 78 den Behälter 86 übernehmen und an beliebiger Stelle in den Regalen 72, 74 einlagern.

Aus dem Regallager auszulagernde Behälter werden von dem Regalbediengerät 78, gezeigt am Beispiel des Behälters 88, auf die jeweils vorderen Lagerplätze der untersten Regalebene des linken Regals 74 ausgelagert. Von diesen Lagerplätzen wird der Behälter 88 dann auf den Transportwagen 94 übernommen und entlang den Schienen 90 abtransportiert.

Zum Übergeben der Behälter 86, 88 von den Transportwagen 94, 96 auf die Lagerplätze in den jeweiligen untersten Regalebenen der Regale 72, 74 und umgekehrt zum Übernehmen der Behälter 86, 88 auf die Transportwagen 94, 96 können im Wesentlichen beliebige Transportmittel verwendet werden, beispielsweise Riemen wie anhand von Fig. 3 erläutert oder auch Transportschlitten, Hubgabeln oder dergleichen. Diese Transportmittel müssen nicht notwendigerweise auf den Transportwagen 94, 96 angeordnet sein, sondern können beispielsweise auch am Regal 72, 74 selbst angeordnet sein, beispielsweise in Form eines an und für sich konventionellen Riemenförderers.

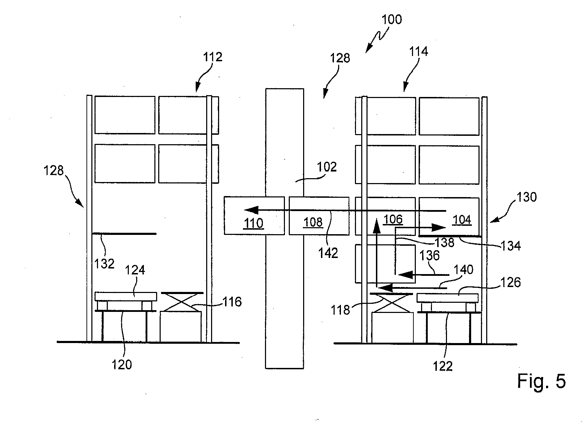

Die Darstellung der Fig. 5 zeigt eine weitere bevorzugte Ausführungsform eines erfindungsgemäßen Regallagers 100. Mit dem erfindungsgemäßen Regallager 100 ist ein sogenannter Quattro-Zyklus realisierbar, bei dem mit dem Regalbediengerät 102 gleichzeitig vier Behälter 104, 106, 108 und 110 bewegt werden, wobei zwei Behälter 110, 108 vom Regalbediengerät 102 in ein in Fig. 5 linkes Regal 112 übergeben werden und zwei Behälter 106, 104 vom in Fig. 5 rechten Regal 114 auf das Regalbediengerät 102 übernommen werden. Dies wird nachfolgend noch erörtert. Mit einem solchen Quattro-Zyklus oder Vierfachzyklus kann der Durchsatz des erfindungsgemäßen Regallagers 100 wesentlich erhöht werden.

Anhand des Regals 112 ist zu erkennen, dass im Vergleich zu den in Fig. 4 dargestellten Regalen 72, 74 die unterste Regalebene entfällt und anstelle der untersten Regalebene unterhalb der jeweils vorderen Lagerplätze der Regale 112, 114 jeweils eine Hubstation 116, 118 angeordnet ist. Unterhalb der jeweils hinteren Lagerplätze in den Regalen 112, 114 sind Schienen 120, 122 verlegt, auf denen Transportwagen 124 bzw. 126 parallel zu einer Lagergasse 128 entlang den Regalen 112, 114 verfahren werden können.

Oberhalb der Schienen 120, 122 für die Transportwagen 124, 126 sind in einer Regalebene 128 im linken Regal 112 und in einer Regalebene 130 im rechten Regal 114 Ablagen 132, 134 für jeweils einen Lagergutbehälter vorgesehen. Diese Ablagen 132, 134 erstrecken sich lediglich bis zur halben Tiefe des Regals, so dass die Regalebenen 128, 130 durch die Ablagen 132, 134 lediglich für das Ablegen eines Behälters auf dem jeweils hinteren Lagerplatz geeignet sind. Die oberhalb der Regalebenen 128, 130 liegenden Regalebenen sind jeweils doppelt tief ausgebildet. Die Ablagen 132, 134 und somit alle hinteren Lagerplätze der Regalebenen 128, 130 werden als Übergabeplätze genutzt.

Beispielsweise wird in einem ersten Schritt der erste Behälter 104 mit dem Transportwagen 126 unten in das Regal 114 eingefahren und dann gemäß dem Pfeil 136 nach links auf die Hubstation 118 übergeben. Die Hubstation 118 hebt den ersten Behälter 104 entsprechend dem Pfeil 138 an bis auf Höhe der Regalebene 130 und bewegt den Behälter 104 dann, wieder gemäß dem Pfeil 138, nach rechts auf die Ablage 134. Das Verschieben des Behälters von der Hubstation 118 nach rechts auf die Ablage 134 kann mittels geeigneter Transportmittel auf der Hubstation 118 oder mittels Transportmitteln in der Ablage 134 erfolgen.

Nachfolgend wird in einem zweiten Schritt der zweite Behälter 106 mittels des Transportwagens 126 oder eines anderen, auf den Schienen 122 laufenden Transportwagens angeliefert und ebenfalls nach links gemäß dem Pfeil 140 auf die wieder abgesenkte Hubstation 118 bewegt. Die Hubstation 118 fährt den zweiten Behälter 106 daraufhin in die in Fig. 5 dargestellte Position also auf den vorderen Lagerplatz der Regalebene 130 und auf gleiche Höhe mit dem Behälter 104 und bleibt in dieser Lage stehen. Der erste Behälter 104 und der zweite Behälter 106 sind dadurch hintereinander in der Regalebene 130 angeordnet.

In dieser Position werden in einem dritten Schritt die Behälter 104, 106 von dem Regalbediengerät 102 übernommen, das bereits mit einem dritten Behälter 108 und einem vierten Behälter 110 beladen ist, die aus den Regalen 114, 112 ausgelagert werden sollen. Die vier Behälter 104, 106, 108, 110 werden dann gemäß dem Pfeil 142 mittels des Regalbediengeräts gleichzeitig in der Darstellung der Fig. 5 nach links bewegt.

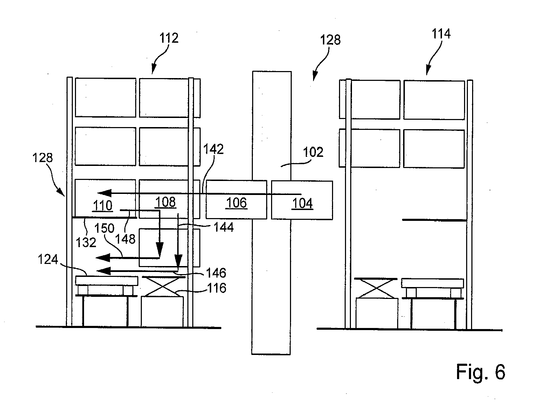

Wie anhand der Fig. 6 zu erkennen ist, werden noch in dem dritten Schritt die ersten beiden Behälter 104, 106 dadurch in die Lagergasse 128 und auf das Regalbediengerät 102 bewegt, um dann nachfolgend mittels des Regalbediengeräts 102 in das Regal 112 oder 114 eingelagert zu werden. Der dritte Behälter 108 und der vierte Behälter 110 werden in die Regalebene 128 des Regals 112 eingeschoben, wobei der vierte Behälter 110 auf der Ablage 132 zu liegen kommt. Der dritte Behälter 108 kommt auf der nach oben ausgefahrenen Hubstation 116 zu liegen.

Nachfolgend wird in einem vierten Schritt gemäß dem Pfeil 144 die Hubstation 116 nach unten in die dargestellte Lage gefahren, so dass gleichgleichzeitig der dritte Behälter 108 abgesenkt wird. Gemäß dem Pfeil 146 wird der dritte Behälter 108 dann auf den Transportwagen 124 verschoben und kann abtransportiert werden.

In einem fünften Schritt wird dann der vierte Behälter 110 gemäß dem Pfeil 148 zunächst nach rechts von der Ablage 132 auf die wieder nach oben ausgefahrene Hubstation 116 bewegt und nachfolgend, wieder gemäß dem Pfeil 148, nach unten abgesenkt. In der abgesenkten Stellung der Hubstation 116 kann auch der vierte Behälter 110 dann gemäß dem Pfeil 150 nach links auf den wieder zurückgekehrten Transportwagen 124 oder einen anderen Transportwagen übergeben werden.

Wie zu erkennen ist, werden in einem dritten Schritt gemäß dem Pfeil 142 gleichzeitig vier Behälter mit dem Regalbediengerät 102 bewegt, nämlich die beiden ersten Behälter 104, 106 werden von der Regalebene 130 des Regals 114 auf das Regalbediengerät 102 übernommen und gleichzeitig werden der dritte Behälter 108 und der vierte Behälter 110 mittels des Regalbediengeräts 102 in die Regalebene 128 des Regals 112 verschoben. Auf diese Weise kann der Durchsatz durch das erfindungsgemäße Regallager 128 wesentlich erhöht werden.

## Patentansprüche

1. Regallager mit einem Regal (12, 14), das Lagerplätze für Lagergut in mehreren waagerechten Regalebenen und mehreren senkrechten Regalreihen aufweist, wenigstens einem Regalbediengerät (22) mit einem Lastaufnahmemittel (28) für Lagergut, wobei das Regalbediengerät (22) entlang der Regalebenen und Regalreihen verfahrbar ist, **dadurch gekennzeichnet, dass** ein weiteres Transportgerät zum Bereitstellen von in das Regal (12, 14) einzulagerndem oder zum Übernehmen von aus dem Regal (12, 14) auszulagerndem Ladegut vorgesehen ist, das entlang einer vordefinierten Regalebene (34) verfahrbar und zum Aufnehmen und Ablegen von Lagergut in wenigstens zwei Lagerplätze (46) der vordefinierten Regalebene (34) ausgebildet ist, wobei die wenigstens zwei Lagerplätze (46) als Übergabeplätze ausgebildet sind, von denen das Regalbediengerät (22) Lagergut übernimmt oder an die das Regalbediengerät (22) Lagergut übergibt.

2. Regallager nach Anspruch 1, **dadurch gekennzeichnet, dass** das weitere Transportgerät zum Aufnehmen und Ablegen von Lagergut in eine Anzahl von hintereinander in Verfahrrichtung des weiteren Transportgeräts angeordneten Lagerplätzen ausgebildet ist, wobei die Anzahl der Lagerplätze (46) der Anzahl an Regalreihen entspricht.

3. Regallager nach Anspruch 1 oder 2, **dadurch gekennzeichnet, dass** das weitere Transportgerät wenigstens eine entlang der vordefinierten Regalebene (34) verlaufende Schiene (38) und einen entlang der Schiene (38) verfahrbaren Transportwagen (36) aufweist.

4. Regallager nach einem der vorstehenden Ansprüche, **dadurch gekennzeichnet, dass** das Regalbediengerät und das weitere Transportgerät auf verschiedenen Seiten des Regals angeordnet sind.

5. Regallager nach einem der vorstehenden Ansprüche, **dadurch gekennzeichnet, dass** das weitere Transportgerät entlang der untersten Regalebene (34) des Regals (14) verfahrbar ist.

6. Regallager nach einem der vorstehenden Ansprüche, **dadurch gekennzeichnet, dass** das Regal (14) wenigstens doppelttief mit zwei Lagerplätzen für Lagergut hintereinander in Tiefenrichtung ausgebildet ist und dass das weitere Transportgerät innerhalb des Regals (14) entlang der vordefinierten Regalebene (4) verfahrbar ist.

7. Regallager nach einem der vorstehenden Ansprüche, **dadurch gekennzeichnet, dass** als Ladegut trogartige Behälter (16, 18, 42, 44) vorgesehen sind.

8. Regallager nach einem der vorstehenden Ansprüche, **dadurch gekennzeichnet, dass** zwei Regale (72, 74; 112, 114) vorgesehen sind, die jeweils angrenzend an eine Lagergasse (76; 128) vorgesehen sind und wobei jedem der Regale (72, 74; 112, 114) ein weiteres Transportgerät für Ladegut zugeordnet ist, das entlang einer vordefinierten Regalebene verfahrbar ist.

9. Regallager nach einem der vorstehenden Ansprüche, **dadurch gekennzeichnet, dass** wenigstens eine Hubstation vorgesehen ist, die unmittelbar angrenzend an das weitere Transportgerät angeordnet ist.

10. Regallager nach Anspruch 9, **dadurch gekennzeichnet, dass** jede Regalreihe, in der ein Übergabeplatz für Ladegut angeordnet ist, eine Hubstation aufweist.
